# FASCICULE DE BREVET EUROPEEN

(11) **EP 4 282 046 B1**
(45) Date de publication et mention de la délivrance du brevet: **04.09.2024**
(21) Numéro de dépôt: 22701897.5
(22) Date de dépôt: 13.01.2022
(51) Int. Cl.: H02G 3/04, B60R 16/02, B64C 1/40, F16L 3/18, H02G 3/06

(54) **CHEMIN DE CÂBLES D'AÉRONEF ET DISPOSITIF DE CLOISONNEMENT ÉLECTRIQUE**
LUFTSCHIFF-KABELKANAL UND ELEKTRISCHE TRENNVORRICHTUNG
AIRCRAFT CABLE TRAY AND ELECTRICAL PARTITIONING DEVICE

(30) Priorité: 21.01.2021 FR 2100565
(43) Date de publication de la demande: 29.11.2023
(73) Titulaire: LATELEC, 31500 Toulouse (FR)
(72) Inventeur: NICHOLAS, Jay, Llantrissant CF72 8DU (GB); VINAYAN SUDHA, Streeghosh, 04109 Leipzig (DE)
(74) Mandataire: Junca, Eric
(86) Numéro de dépôt international: PCT/EP2022/050618
(87) Numéro de publication internationale: WO 2022/157065

(56) Documents cités:
- EP-A2- 2 624 388
- GB-A- 2 575 107
- US-A1- 2001 017 214

## Description

### DOMAINE TECHNIQUE

L'invention concerne le domaine de l'aéronautique et vise l'agencement des chemins de câbles au sein des architectures électriques d'aéronef.

Les chemins de câbles d'aéronef définissent les trajets des harnais de câblage électrique par rapport à la structure d'un aéronef, en les maintenant en position et en les protégeant. Les harnais de câblage électrique sont constitués des faisceaux de câbles cheminant entre diverses installations électriques de l'aéronef.

### ART ANTÉRIEUR

Les chemins de câbles d'aéronef sont généralement constitués par des profilés s'étendant dans le prolongement les uns des autres. Entre certains profilés, un écart prédéterminé est prévu pour permettre un mouvement relatif des profilés sans dommage. Les chemins de câbles d'aéronef peuvent en effet être fixés sur des parties structurelles de l'aéronef qui peuvent être flexibles. Par exemple, les chemins de câbles s'étendant le long des ailes d'un avion sont soumis à un mouvement de flexion d'amplitude relativement importante lors du vol de l'avion.

Dans les agencements de chemins de câbles connus, deux types de chemins de câbles sont généralement prévus : des chemins de câbles de puissance acheminant des câbles d'alimentation d'équipements ou d'actionneurs, avec des câbles de forte section et impliquant des tensions et/ou courants élevés ; des chemins de câbles de signaux, prévus à l'écart des précédents, acheminant des câbles de signaux électriques, avec des câbles de faible section et impliquant des courants et des tensions peu élevées. Ces chemins de câbles de types différents sont dimensionnés et isolés en conséquence, au vu des courants et tensions mis en oeuvre pour chacun.

Le document GB2575107A décrit un dispositif comportant l'ensemble des caractéristiques du préambule de la revendication 1.

Ces différents types de chemins de câbles de dimensionnement différent, notamment en ce qui concerne l'isolation électrique, entrainent des cheminements de harnais non optimaux ainsi que des coûts élevés.

### EXPOSÉ DE L'INVENTION

Les derniers développements dans la conception des aéronefs tendent à repenser les configurations électriques notamment en ce qui concerne le cheminement des harnais.

L'invention a pour but d'améliorer les agencements de chemins de câbles au sein des aéronefs de l'art antérieur.

À cet effet, l'invention vise un dispositif de cloisonnement électrique selon la revendication 1.

Selon un autre objet, l'invention vise un chemin de câbles d'aéronef selon la revendication 8.

Un tel chemin de câbles et son dispositif de cloisonnement électrique rendent possible des architectures électriques d'aéronef dans lesquelles de multiples profilés sont regroupés au sein de mêmes chemins de câbles canalisant les harnais comportant aussi bien des câbles de puissance que des câbles de signaux.

Par exemple, les commandes de vol sont nécessairement doublées dans un aéronef, pour des raisons de sécurité. Cette redondance nécessite un doublement des circuits de câblage qui complexifie l'installation et la rend couteuse en équipement et en temps de montage. L'invention permet avantageusement de doubler ces circuits de manière cohérente en transportant à la fois la puissance et les signaux au sein des mêmes chemins de câble. Dans ce contexte, l'invention peut mettre en oeuvre des chemins de câble doubles avec un canal pour les câblages de puissance et un autre canal pour le câblage de signaux. Un gain de place et de matériaux est obtenu sans risques électriques.

L'invention accompagne les évolutions récentes qui visent à réduire les dispositifs hydrauliques au sein des aéronefs, et à les remplacer par des dispositifs électriques de plus en plus complexes et mettant en oeuvre des tensions de plus en plus élevées. Ces tensions élevées sont propices à la formation d'arcs électriques.

Une importante problématique relative aux câblages hétérogènes réside dans le fait qu'en cas d'anomalie électrique, due par exemple à un défaut d'isolation d'un conducteur, un arc électrique peut se produire entre le conducteur défectueux et un élément extérieur au chemin de câbles ou disposé dans un profilé voisin au sein du même chemin de câbles.

Le panneau diélectrique cloisonne l'espace de l'entaille et ses dimensions ainsi que son matériau sont de préférence choisis pour empêcher tout arc électrique au vu des tensions mises en oeuvre dans une application.

Le dispositif de cloisonnement électrique permet de relier fonctionnellement les extrémités de deux profilés constituant ensemble un chemin de câbles, en augmentant l'écart prédéterminé qui favorise une meilleure adaptation à la flexibilité des structures aéronautiques sur laquelle sont montés les chemins de câbles. L'augmentation de cet écart prédéterminé se fait sans impacter la qualité de l'isolation électrique du chemin de câbles et le risque de formation d'arc électrique est au contraire diminué. Grâce à l'invention, les écarts prédéterminés entre les profilés peuvent ainsi être augmentés sans risque d'apparition d'un arc électrique. Dans l'art antérieur, ces écarts prédéterminés sont réduits au minimum et sont par exemple de l'ordre de 3 mm pour limiter les risques d'arc électrique. Dans ce même type d'application, l'invention permet d'augmenter cet écart prédéterminé à des valeurs de l'ordre de 8 mm, ce qui augmente la capacité du chemin de câble à la tenue en flexion, tout en garantissant l'absence d'arc électrique à la jointure des profilés.

Le dispositif de cloisonnement électrique est à même de coulisser par rapport aux profilés du chemin de câbles et permet ainsi un mouvement relatif des extrémités en vis-à-vis de deux profilés, sans interférence du dispositif de cloisonnement électrique. La butée de limitation de translation permet par ailleurs de maintenir le dispositif de cloisonnement électrique fonctionnel au niveau de l'entaille, en maintenant l'amplitude de cette liaison glissante à une valeur correspondant à l'écart prédéterminé.

Le dispositif de cloisonnement électrique est de préférence maintenu dans le chemin de câbles d'aéronef directement par le harnais se trouvant dans le chemin de câbles, de sorte que le dispositif de cloisonnement électrique n'a besoin d'aucun moyen de fixation sur le chemin de câbles. Un gain en temps et en moyens de production est ainsi réalisé lors du montage de l'aéronef. La mise en place du dispositif de cloisonnement électrique sur le chemin de câbles se fait de plus sans erreur de positionnement possible, la butée de limitation de translation étant simplement insérée dans l'entaille.

Le dispositif de cloisonnement électrique est particulièrement avantageux pour les chemins de câbles comportant de multiples profilés disposés parallèlement, la butée de limitation de translation pouvant alors former de plus un pont de liaison entre différentes portions du dispositif correspondant à des canaux de guidage de câble différents.

Le dispositif de cloisonnement électrique selon l'invention peut comporter les caractéristiques additionnelles suivantes, seules ou en combinaison :
- la butée de limitation de translation est réalisée par une nervure s'étendant sensiblement perpendiculairement aux panneaux diélectriques ;
- la nervure constituant la butée de limitation de translation s'étend sur plus de la moitié de la hauteur des panneaux diélectriques auxquels elle est rattachée ;
- la butée de limitation de translation relie également les deux embases de pontage de paroi de fond ;
- le dispositif de cloisonnement électrique est moulé par injection ;
- l'embase de pontage de paroi de fond comporte au moins une encoche ;
- au moins un panneau diélectrique comporte au moins un clip de maintien pour solidariser le dispositif à un profilé d'un chemin de câble.

Le chemin de câbles selon l'invention peut comporter les caractéristiques additionnelles suivantes, seules ou en combinaison :
- le dispositif de cloisonnement électrique est mobile en translation le long de l'axe longitudinal, cette translation étant limitée d'une part par le contact de la butée de limitation de translation avec l'un des profilés, et d'autre part par le contact de la butée de limitation de translation avec l'autre profilé ;
- les profilés comportent chacun au moins deux canaux de guidage de câbles, les deux embases de pontage de paroi de fond du dispositif de cloisonnement électrique étant disposées chacune dans l'un de ces canaux de guidage de câbles ;
- la butée de limitation de translation est disposée transversalement dans la portion de l'entaille située entre les deux canaux de guidage de câbles ;
- le chemin de câbles comporte des harnais de câblage électrique disposés dans les deux canaux de guidage de câble, et s'étendant dans les passages de câbles du dispositif de cloisonnement électrique ;
- le chemin de câble comporte une jonction élastique reliant les deux profilés au niveau de l'entaille ;
- les profilés comportent au moins une excroissance complémentaire et en vis-à-vis de l'encoche de l'embase de pontage de paroi de fond.

### PRÉSENTATION DES FIGURES

D'autres caractéristiques et avantages de l'invention ressortiront de la description non limitative qui suit, en référence aux dessins annexés dans lesquels :
- La [Fig.1] représente en perspective un chemin de câbles selon l'invention ;
- La [Fig.2] est une vue de détail de la figure 1 ;
- La [Fig.3] représente en perspective un dispositif de cloisonnement électrique selon l'invention ;
- La [Fig.4] est une vue en coupe du chemin de câbles de la figure 1 ;
- La [Fig.5] est une vue de dessous du dispositif de cloisonnement électrique de la figure 3 ;
- La [Fig.6] est une vue de dessus du chemin de câbles de la figure 1 ;
- La [Fig.7] est une vue de dessous du dispositif de cloisonnement présentant des encoches sur l'embase de pontage de paroi de fond ;
- La [Fig.8] est une vue en perspective du dispositif de cloisonnement présentant des clips de maintien.

### DESCRIPTION DÉTAILLÉE

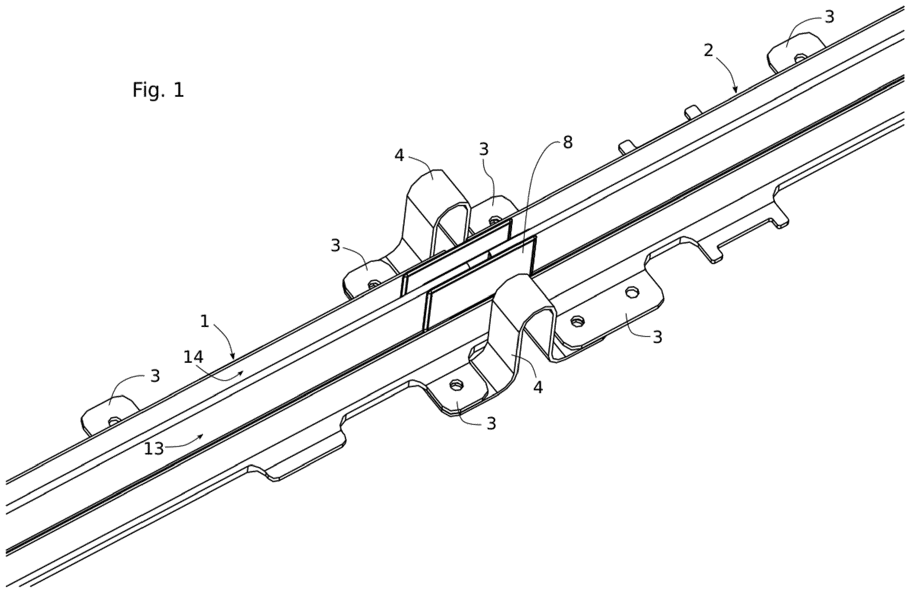

La figure 1 représente en perspective une portion d'un chemin de câbles mis en oeuvre au sein d'un aéronef.

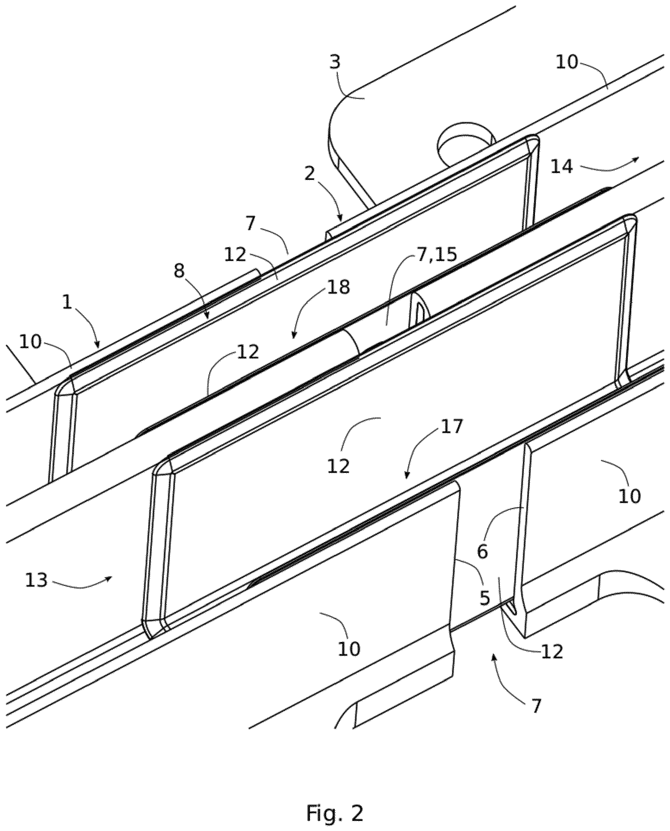

Ce chemin de câbles comporte un premier profilé 1 et un deuxième profilé 2 qui sont disposés dans le prolongement l'un de l'autre suivant l'axe longitudinal et qui sont fixés à la structure de l'aéronef par des pattes de fixation 3. Une extrémité de chacun des profilés 1, 2 est visible sur la figure 2. Ces extrémités sont en vis-à-vis l'une de l'autre et sont reliées par une jonction élastique 4 reliant des pattes de fixation 3 de chacun des profilés 1, 2. La jonction élastique 4 peut être réalisée par tout moyen permettant une liaison flexible entre les profilés, et est ici constituée de deux pattes élastiques présentant un corps en forme de U.

La figure 2 est une vue agrandie de la zone de jointure des profilés 1, 2. Les deux profilés 1, 2 sont fixés de sorte qu'une extrémité 5 du premier profilé 1 soit disposée en vis-à-vis d'une extrémité 6 du deuxième profilé 2. Un écart prédéterminé constituant une entaille 7 est prévu entre les extrémités 5, 6 des profilés 1, 2. L'entaille 7 permet un mouvement relatif des profilés 1, 2 suivant le mouvement permis par la jonction élastique 4, pour permettre au chemin de câbles de suivre les déformations de la structure de l'aéronef, notamment durant le vol.

L'entaille 7, qui présente ici une largeur constante, est définie par l'écart prédéterminé entre les profilés 1, 2 qui est dimensionné pour chaque aéronef en fonction de son comportement en flexion dans la zone concernée par le passage du chemin de câbles.

Le chemin de câbles est constitué, dans cet exemple, de profilés 1, 2 qui sont chacun des profilés doubles, c'est-à-dire que ces profilés 1, 2 comportent deux compartiments longitudinaux formés chacun par une paroi de fond 9 et deux parois latérales 10. Les profilés 1, 2 sont mis bout à bout de sorte que ces compartiments longitudinaux forment ensemble deux canaux 13, 14 s'étendant parallèlement le long du chemin de câbles. Le chemin de câbles illustré comporte ainsi deux canaux 13, 14 séparés, adaptés au maintien et à la protection de harnais de câblage électrique.

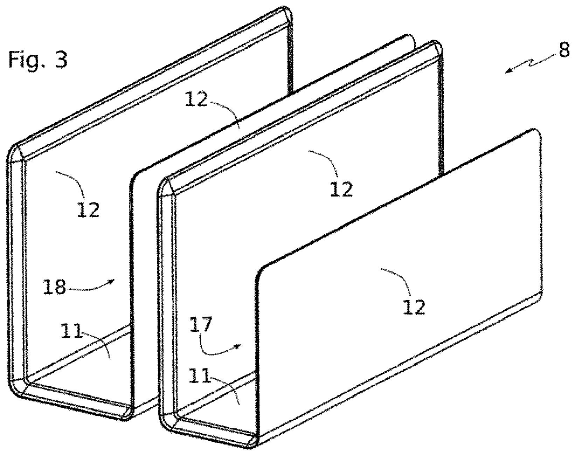

Le chemin de câbles comporte de plus un dispositif de cloisonnement électrique 8 qui est représenté seul en perspective à la figure 3.

Le dispositif de cloisonnement électrique 8, moulé par injection, comporte deux passages de câbles 17, 18 correspondant aux deux canaux 13, 14 du chemin de câbles. Chacun de ces passages de câbles est défini par une embase 11 de pontage de paroi de fond ainsi que deux panneaux diélectriques 12 s'étendant transversalement à partir de l'embase 11. Dans le présent exemple, les panneaux diélectriques 12 sont saillants perpendiculairement à l'embase 11 correspondante.

L'embase 11 de pontage de paroi de fond est destinée à réaliser un pontage entre la paroi de fond 9 d'un profilé 1, et la paroi de fond 9 de l'autre profilé 2, au niveau de l'entaille 7.

Les panneaux diélectriques 12 sont réalisés en un matériau diélectrique approprié à l'isolation des harnais à monter dans le chemin de câbles, au vu notamment des tensions en jeu. Les panneaux diélectriques 12 sont dimensionnés (en épaisseur et choix du matériau) pour éviter le passage d'un arc électrique entre deux canaux 13, 14 par l'entaille 7. L'entaille 7 comporte en effet une portion centrale 15 délimitée par un espace entre les extrémités des parois latérales 10 centrales (c'est-à-dire les parois latérales 10 entre les deux canaux 13, 14).

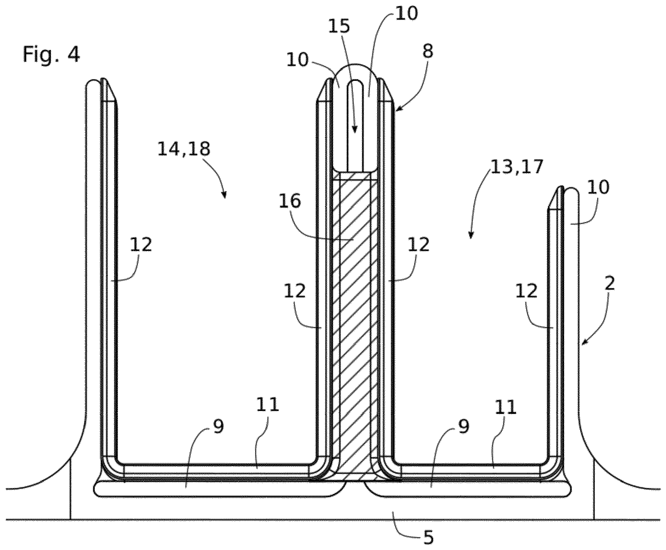

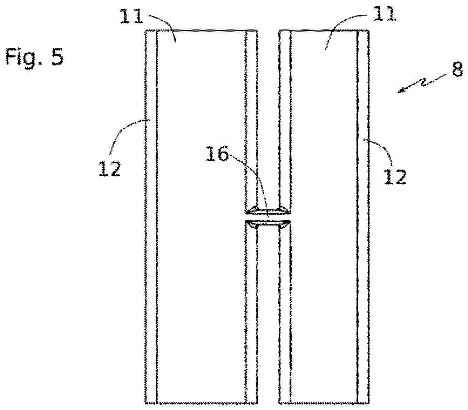

Le dispositif de cloisonnement électrique 8 comporte de plus une butée 16 de limitation de translation qui raccorde les deux panneaux diélectriques 12 centraux. La butée de limitation de translation 16 est fixée sur les panneaux diélectriques 12 en dehors des passages 17, 18 de câbles. Les figures 4 et 5 rendent compte de la géométrie de la butée 16 de limitation de translation.

La figure 4 est une vue du chemin de câbles en coupe transversale selon un plan qui est perpendiculaire au chemin de câbles et qui passe par l'entaille 7 en coupant la butée 16 de limitation de translation. Les hachures obliques illustrent la coupe dans l'épaisseur de la butée 16. Cette butée 16 est constituée d'une nervure s'étendant perpendiculairement aux panneaux diélectriques 12, et qui s'étendent sur une hauteur significative à partir de l'embase 11. Dans le présent exemple, la nervure constituant la butée 16 s'étend sur plus de la moitié de la hauteur des panneaux diélectriques 12 auxquels elle est rattachée, et cette hauteur est de l'ordre de trois quarts de la hauteur des panneaux diélectriques 12 centraux. La hauteur est ici définie comme la dimension prise selon la verticale en référence à la figure 4.

Les tranches des panneaux diélectriques 12 sont de préférence biseautées pour ne pas endommager les harnais de câblage lors de leur positionnement dans les canaux 13, 14.

Le dispositif de cloisonnement électrique 8 est disposé par rapport aux profilés 1, 2 de sorte que les embases 11 de pontage de paroi de fond s'étendent à travers l'entaille 7, entre les deux parois de fond 9 des profilés 1, 2 pour chaque canal 13, 14. De même, les panneaux diélectriques 12 s'étendent à travers l'entaille 7 et obturent cette entaille 7 entre les parois latérales 10 des profilés 1, 2.

Les deux parois latérales 10 centrales sont prises en sandwich par les deux panneaux diélectriques 12 centraux qui sont reliés par la butée 16 de limitation de translation. La butée 16 de limitation de translation est disposée transversalement dans la portion centrale 15 de l'entaille 7, c'est-à-dire la portion qui est située entre les deux canaux 13, 14 de guidage de câbles.

En référence aux figures 2 et 4, le dispositif de cloisonnement électrique 8 est monté à la jonction des deux profilés 1, 2 avec un jeu mécanique permettant un glissement dans les profilés 1, 2. Le dispositif de cloisonnement électrique 8 peut être monté par tout moyen permettant une liaison glissante sur les profilés 1, 2. Dans le présent exemple, la liaison glissante est obtenue par une liaison plan sur plan entre d'une part les embases 11 et les parois de fond 9 correspondantes, et d'autre part entre les panneaux diélectriques 12 et les parois latérales 10 correspondantes.

La figure 5 illustre le dispositif de cloisonnement électrique 8 vu de dessous et montre également le rattachement des deux embases de pontage 11 par la butée de limitation de translation 16.

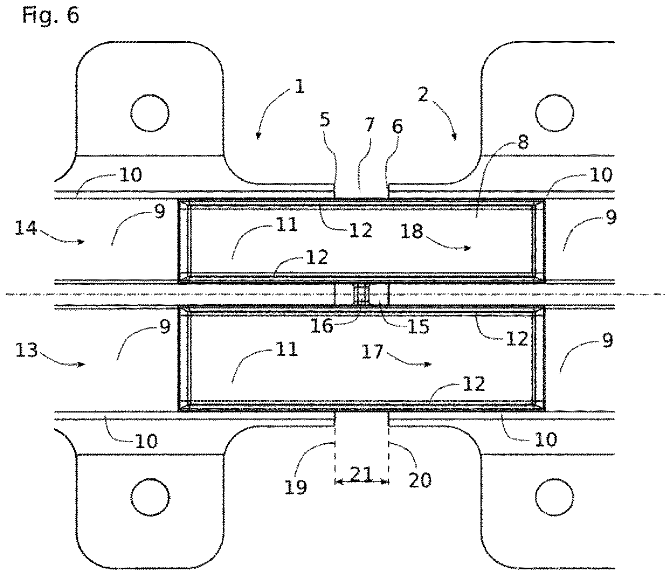

La figure 6 est une vue de dessus des éléments de la figure 2. Sur cette vue, le dispositif de cloisonnement électrique 8 est en position médiane compte tenu de son amplitude possible de translation, la butée de limitation de translation 16 étant située à mi-chemin entre les deux extrémités 5, 6 des profilés 1, 2.

À partir de cette position de la figure 6, le dispositif de cloisonnement électrique 8 est adapté à une translation libre par rapport aux profilés 1, 2 entre :
- une première position extrême 19 de butée, correspondant au positionnement de la butée de limitation de translation 16 contre l'extrémité 5 du premier profilé 1 ; et
- une deuxième position extrême 20 de butée, correspondant au positionnement de la butée de limitation de translation 16 contre l'extrémité 6 du deuxième profilé 2.

Ces deux positions extrêmes 19, 20 de butée définissent une amplitude de translation 21 dans le coulissement du dispositif de cloisonnement électrique 8 suivant l'axe longitudinal 22 du chemin de câbles.

Le dispositif de cloisonnement électrique 8 est ajusté aux dimensions des profilés 1, 2 et est monté dans le chemin de câbles sans aucune fixation. La butée de limitation de translation 16 retient le dispositif 8 au niveau de l'entaille 7, en l'obturant, et en permettant le mouvement de translation. Le dispositif 8 est de plus maintenu sur les profilés par les harnais de câblage eux-mêmes (non représentés), qui s'étendent tout le long des canaux 13, 14 et qui plaquent ainsi l'embase 11 de pontage de parois de fond contre les parois de fond 9 correspondantes.

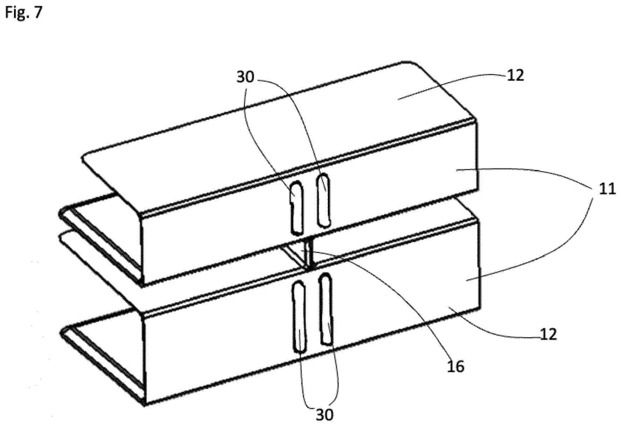

La figure 7 est une vue du dessous du dispositif de cloisonnement 8 dont l'embase 11 de pontage de parois de fond comporte quatres encoches 30 disposées au voisinage des extrémités 5,6 des profilés 1,2. Ces extrémités présentent des excroissances orientées vers l'embase 11, ces excroissances étant complémentaires et en vis à vis des encoches 30. L'association des excroissances et des encoches 30 permet d'apporter un maintien supplémentaire du dispositif de cloisonnement 8 dans les profilés 5,6 et renforcer l'effet de la butée de limitation de translation 16.

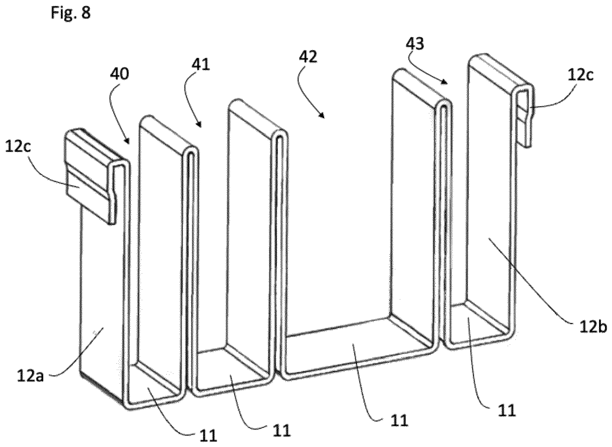

La figure 8 montre une vue en perspective d'un dispositif de cloisonnement 8 présentant quatres passages de câbles 40, 41, 42, 43 et deux panneaux diélectriques extrêmes 12a, 12b comportant chacun un clip 12c de maintien. Ces clips 12c de maintien permettent de solidariser le dispositif de cloisonnement 8 aux profilés 1, 2 du chemin de câbles et renforcent également l'effet de la butée de limitation de translation 16 en enserrant les parois latérales 10 des profilés 1, 2. Ces clips 12c sont ici formés lors du moulage du dispositif de cloisonnement 8 mais ils peuvent également être fixés aux panneaux diélectriques extrêmes 12a, 12b par collage ou par tout autre moyen de fixation.

Des variantes de réalisation du dispositif de cloisonnement électrique 8 peuvent être mises en oeuvre. Dans le présent exemple, le dispositif de cloisonnement électrique 8 est relatif à un chemin de câbles comportant deux canaux dont les dimensions peuvent être différentes. Cependant, le dispositif de cloisonnement électrique 8 peut être adapté à tout chemin de câbles, quel que soit son nombre de canaux.

Par ailleurs, le dispositif de cloisonnement électrique 8 peut comporter plusieurs butées de limitation de translation alignées et redondantes, par sécurité. Ces butées peuvent également s'étendre sur l'embase 11 du dispositif et sur tout panneau diélectrique 12 pour prendre appui sur l'entaille 7 entre les profilés 1, 2.

## Revendications

1. Dispositif de cloisonnement électrique (8) pour chemin de câbles d'aéronef, ce dispositif étant adapté à être disposé à la jointure de deux profilés (1,2) d'un chemin de câbles d'aéronef disposés dans le prolongement l'un de l'autre suivant un axe longitudinal (22) et dont les deux extrémités (5,6) en vis-à-vis sont espacées d'un écart prédéterminé définissant une entaille (7) et comportant :
- au moins une embase (11) de pontage de paroi de fond étant configurée pour s'appuyer sur la paroi de fond (9) de chaque profilé (1 2) et s'étendre d'un bord à l'autre de l'entaille (7);
- au moins un panneau diélectrique (12) s'étendant transversalement à l'embase (11) de pontage de paroi de fond et délimitant avec l'embase (11) de pontage de paroi de fond un passage (17,18) de câbles, le panneau diélectrique (12) étant configuré pour obturer l'entaille (7) entre deux parois latérales (10) des profilés (1 ,2);
- une butée de limitation de translation (16) fixée sur un panneau diélectrique (12) en dehors du passage (17,18) de câble ;
ce dispositif de cloisonnement électrique (8) comporte au moins deux passages de câbles (17, 18) configurées pour s'étendre parallèlement le long du chemin de câbles et délimité chacun par une des lesdites embase (11) de pontage de paroi de fond et par deux des lesdites panneaux diélectriques (12) saillants sensiblement perpendiculairement à cette embase (11) de pontage de paroi de fond, ce dispositif de cloisonnement électrique (8) étant **caractérisé en ce que** la butée de limitation de translation (16) est configurée pour être disposée transversalement dans l'entaille (7), entre deux parois latérales (10) des profilés (1 2) et relie un panneau diélectrique (12) de l'un des passages de câbles avec un panneau diélectrique (12) de l'autre passage de câbles.

2. Dispositif selon la revendication 1, **caractérisé en ce que** la butée de limitation de translation (16) est réalisée par une nervure s'étendant sensiblement perpendiculairement aux panneaux diélectriques (12).

3. Dispositif selon la revendication 2, **caractérisé en ce que** la nervure constituant la butée de limitation de translation (16) s'étend sur plus de la moitié de la hauteur des panneaux diélectriques (12) auxquels elle est rattachée.

4. Dispositif selon l'une des revendications 1 à 3, **caractérisé en ce que** la butée de limitation de translation (16) relie également les deux embases (11) de pontage de paroi de fond.

5. Dispositif selon l'une des revendications 1 à 4, **caractérisé en ce qu'**il est moulé par injection.

6. Dispositif selon l'une des revendication 1 à 5, **caractérisé en ce que** l'embase (11) de pontage de paroi de fond comporte au moins une encoche (30).

7. Dispositif selon l'une des revendications 1 à 5, **caractérisé en ce qu'**au moins un panneau diélectrique (12) comporte au moins un clip (12c) de maintien.

8. Chemin de câbles d'aéronef, comportant au moins deux profilés (1,2) disposés dans le prolongement l'un de l'autre suivant un axe longitudinal (22) et dont les deux extrémités (5,6) en vis-à-vis sont espacées d'un écart prédéterminé définissant une entaille (7), les profilés (1,2) comportant chacun une paroi de fond (9) et au moins une paroi latérale (10), **caractérisé en ce qu'**il comporte un dispositif de cloisonnement électrique (8) selon l'une des revendications 1 à 7 qui est coulissant par rapport aux profilés (1,2), et **en ce que** :
- l'embase (11) de pontage de paroi de fond s'appuie sur la paroi de fond (9) de chaque profilé (1,2) et s'étend d'un bord à l'autre de l'entaille (7) ;
- le panneau diélectrique (12) obture l'entaille (7) entre deux parois latérales (10) des profilés (1,2) ;
- la butée de limitation de translation (16) est disposée transversalement dans l'entaille (7), entre deux parois latérales (10) des profilés (1,2).

9. Chemin de câbles d'aéronef selon la revendication 8, **caractérisé en ce que** le dispositif de cloisonnement électrique (8) est mobile en translation le long de l'axe longitudinal (22), cette translation étant limitée d'une part par le contact de la butée de limitation de translation (16) avec l'un des profilés (1), et d'autre part par le contact de la butée de limitation de translation (16) avec l'autre profilé (2).

10. Chemin de câbles d'aéronef selon la revendication 9 lorsqu'elle dépend de la revendication 3, **caractérisé en ce que** les profilés (1,2) comportent chacun au moins deux canaux (13,14) de guidage de câbles, les deux embases (11) de pontage de paroi de fond du dispositif de cloisonnement électrique (8) étant disposées chacune dans l'un de ces canaux (13,14) de guidage de câbles.

11. Chemin de câbles selon la revendication 10, **caractérisé en ce que** la butée de limitation de translation (16) est disposée transversalement dans la portion de l'entaille (7) située entre les deux canaux (13,14) de guidage de câbles.

12. Chemin de câbles selon l'une des revendications 10 ou 11, **caractérisé en ce qu'**il comporte des harnais de câblage électrique disposés dans les deux canaux (13,14) de guidage de câble, et s'étendant dans les passages de câbles (17,18) du dispositif de cloisonnement électrique (8).

13. Chemin de câbles selon l'une des revendications 8 à 12, **caractérisé en ce qu'**il comporte une jonction élastique (4) reliant les deux profilés (1,2) au niveau de l'entaille (7).

14. Chemin de câbles selon l'une des revendications 8 à 13 en combinaison avec la revendication 6, caractérisé en que les profilés (1, 2) comportent au moins une excroissance complémentaire et en vis-à-vis d'une encoche (30) de l'embase (11) de pontage de paroi de fond.

## Patentansprüche

1. Elektrische Trennvorrichtung (8) für eine Kabelrinne eines Luftfahrzeugs, wobei die Vorrichtung dazu geeignet ist, an der Verbindungsstelle von zwei Profilen (1, 2) eine Kabelrinne eines Luftfahrzeugs angeordnet zu sein, die in der Verlängerung voneinander entlang einer Längsachse (22) angeordnet sind und deren beide gegenüberliegende Enden (5, 6) um einen vorbestimmten Abstand beabstandet sind, der eine Einbuchtung (7) bildet, umfassend:
- mindestens eine Grundplatte (11) zur Überbrückung der Bodenwand, die dazu konfiguriert ist, an der Bodenwand (9) jedes Profils (1, 2) anzuliegen und sich von einem Rand der Einbuchtung (7) zum anderen zu erstrecken;
- mindestens eine dielektrische Platte (12), die sich quer zur Bodenwandüberbrückungsgrundplatte (11) erstreckt und mit der Bodenwandüberbrückungsgrundplatte (11) einen Kabeldurchgang (17, 18) definiert, wobei die dielektrische Platte (12) dazu konfiguriert ist, die Einbuchtung (7) zwischen zwei Seitenwänden (10) der Profile (1, 2) zu verschließen;
- einen Anschlag (16) zur Verschiebungsbegrenzung, der an einer dielektrischen Platte (12) außerhalb des Kabeldurchgangs (17, 18) befestigt ist;
wobei die elektrische Trennvorrichtung (8) mindestens zwei Kabeldurchgänge (17, 18) umfasst, die dazu konfiguriert sind, sich parallel entlang der Kabelrinne zu erstrecken, und jeweils durch eine der Bodenwandüberbrückungsgrundplatten (11) und durch zwei der dielektrischen Platten (12), die im Wesentlichen senkrecht zur Bodenwandüberbrückungsgrundplatte (11) vorstehen, begrenzt sind,
wobei die elektrische Trennvorrichtung (8) **dadurch gekennzeichnet ist, dass** der Verschiebungsbegrenzungsanschlag (16) dazu konfiguriert ist, quer in der Einbuchtung (7) zwischen zwei Seitenwänden (10) der Profile (1, 2) angeordnet zu sein, und eine dielektrische Platte (12) eines der Kabeldurchgänge mit einer dielektrischen Platte (12) des anderen Kabeldurchgangs verbindet.

2. Vorrichtung nach Anspruch 1, **dadurch gekennzeichnet, dass** der Verschiebungsbegrenzungsanschlag (16) durch eine Rippe gebildet ist, die sich im Wesentlichen senkrecht zu den dielektrischen Platten (12) erstreckt.

3. Vorrichtung nach Anspruch 2, **dadurch gekennzeichnet, dass** sich die Rippe, die den Verschiebungsbegrenzungsanschlag (16) bildet, über mehr als die Hälfte der Höhe der dielektrischen Platten (12), mit denen sie verbunden ist, erstreckt.

4. Vorrichtung nach einem der Ansprüche 1 bis 3, **dadurch gekennzeichnet, dass** der Verschiebungsbegrenzungsanschlag (16) auch die beiden Bodenwandüberbrückungsgrundplatten (11) verbindet.

5. Vorrichtung nach einem der Ansprüche 1 bis 4, **dadurch gekennzeichnet, dass** sie spritzgegossen ist.

6. Vorrichtung nach einem der Ansprüche 1 bis 5, **dadurch gekennzeichnet, dass** die Bodenwandüberbrückungsgrundplatte (11) mindestens eine Einbuchtung (30) umfasst.

7. Vorrichtung nach einem der Ansprüche 1 bis 5, **dadurch gekennzeichnet, dass** mindestens eine dielektrische Platte (12) mindestens einen Halteclip (12c) umfasst.

8. Kabelrinne eines Luftfahrzeugs, umfassend mindestens zwei Profile (1, 2), die in der Verlängerung voneinander entlang einer Längsachse (22) angeordnet sind und deren zwei einander gegenüberliegende Enden (5, 6) um einen vorbestimmten Abstand voneinander beabstandet sind, der eine Einbuchtung (7) definiert, wobei die Profile (1, 2) jeweils eine Bodenwand (9) und mindestens eine Seitenwand (10) umfassen, **dadurch gekennzeichnet, dass** sie eine elektrische Trennvorrichtung (8) nach einem der Ansprüche 1 bis 7 umfasst, die in Bezug auf die Profile (1, 2) verschiebbar ist, und dass:
- die Bodenwandüberbrückungsgrundplatte (11) an der Bodenwand (9) jedes Profils (1, 2) anliegt und sich von einem Rand der Einbuchtung (7) zum anderen erstreckt;
- die dielektrische Platte (12) die Einbuchtung (7) zwischen zwei Seitenwänden (10) der Profile (1, 2) verschließt;
- der Verschiebungsbegrenzungsanschlag (16) quer in der Einbuchtung (7) zwischen zwei Seitenwänden (10) der Profile (1, 2) angeordnet ist.

9. Kabelrinne eines Luftfahrzeugs nach Anspruch 8, **dadurch gekennzeichnet, dass** die elektrische Trennvorrichtung (8) entlang der Längsachse (22) verschiebbar ist, wobei diese Verschiebung einerseits durch den Kontakt des Verschiebungsbegrenzungsanschlags (16) mit einem der Profile (1) und andererseits durch den Kontakt des Verschiebungsbegrenzungsanschlag (16) mit dem anderen Profil (2) begrenzt wird.

10. Kabelrinne eines Luftfahrzeugs nach Anspruch 9, soweit er von Anspruch 3 abhängig ist, **dadurch gekennzeichnet, dass** die Profile (1, 2) jeweils mindestens zwei Kabelführungskanäle (13, 14) umfassen, wobei die beiden Bodenwandüberbrückungsgrundplatten (11) der elektrischen Trennvorrichtung (8) jeweils in einem der Kabelführungskanäle (13, 14) angeordnet sind.

11. Kabelrinne nach Anspruch 10, **dadurch gekennzeichnet, dass** der Verschiebungsbegrenzungsanschlag (16) quer in dem Abschnitt der Einbuchtung (7) angeordnet ist, der sich zwischen den beiden Kabelführungskanälen (13, 14) befindet.

12. Kabelrinne nach einem der Ansprüche 10 oder 11, **dadurch gekennzeichnet, dass** sie elektrische Kabelbäume umfasst, die in den beiden Kabelführungskanälen (13, 14) angeordnet sind und sich in den Kabeldurchgängen (17, 18) der elektrischen Trennvorrichtung (8) erstrecken.

13. Kabelrinne nach einem der Ansprüche 8 bis 12, **dadurch gekennzeichnet, dass** sie eine elastische Verbindung (4) umfasst, die die beiden Profile (1, 2) an der Einbuchtung (7) verbindet.

14. Kabelrinne nach einem der Ansprüche 8 bis 13 in Verbindung mit Anspruch 6, **dadurch gekennzeichnet, dass** die Profile (1, 2) mindestens eine Ausbuchtung umfassen, die komplementär zu einer Einbuchtung (30) der Bodenwandüberbrückungsgrundplatte (11) ist und dieser gegenüberliegt.

## Claims

1. An electrical barrier device (8) for an aircraft cable raceway, this device being designed to be positioned where two profile sections (1, 2) of an aircraft cable raceway meet, disposed in the extension of one another along a longitudinal axis (22) and whose two facing ends (5, 6) in face to face are spaced apart by a predetermined distance defining a notch (7) and comprising:
- at least one bottom-wall bridging base (11) configured to rest on the bottom wall (9) of each section (1, 2) and extend from one edge of the notch (7) to the other;
- at least one dielectric panel (12) running transversely to the bottom-wall bridging base (11) and with the bottom-wall bridging base (11) delimiting a passage for cables (17, 18, the dielectric panel (12) being configured to close the notch (7) between two side walls (10) of the sections (1 ,2);
- a translation-limiting stop (16) fixed to a dielectric panel (12) outside of the cable passage (17, 18); said electrical barrier device (8) comprises at least two cable passages (17, 18), configured to extend parallel along the cable tray and each delimited by one of said bottom-wall bridging base (11) and by two of said dielectric panels (12) protruding substantially perpendicularly from this bottom-wall bridging base (11), this electrical partitioning device (8) being **characterized in that** the translation-limiting stop (16) is configured to be arranged transversely in the notch (7), between two side walls (10) of the profiles (1, 2) and connects a dielectric panel (12) of one of the cable passages to a dielectric panel (12) of the other cable passage.

2. The device as claimed in claim 1, **characterized in that** the translation-limiting stop (16) is implemented by a rib extending substantially perpendicularly to the dielectric panels (12).

3. The device as claimed in claim 2, **characterized in that** the rib constituting the translation-limiting stop (16) extends over more than half of the height of the dielectric panels (12) to which it is attached.

4. The device as claimed in one of claims 1 to 3, **characterized in that** the translation-limiting stop (16) also connects the two bottom-wall bridging bases (11).

5. The device as claimed in one of claims 1 to 4, **characterized in that** it is injection-molded.

6. The device as claimed in one of claims 1 to 5, **characterized in that** the bottom-wall bridging base (11) comprises at least one slot (30).

7. The device as claimed in one of claims 1 to 5, **characterized in that** at least one dielectric panel (12) comprises at least one retaining clip (12c).

8. An aircraft cable raceway comprising at least two profile sections (1, 2) which are arranged in the extension of one another along a longitudinal axis (22), the two opposing ends (5, 6) thereof being spaced apart by a predetermined spacing defining a notch (7) and the profile sections (1, 2) each comprising a bottom wall (9) and at least one lateral wall (10), **characterized in that** it comprises an electrical barrier device (8) as claimed in one of claims 1 to 7, which is slidable relative to the profile sections (1, 2) and **in that**:
- the bottom-wall bridging base (11) bears against the bottom wall (9) of each profile section (1, 2) and extends from one edge to the other of the notch (7);
- the dielectric panel (12) closes the notch (7) between two lateral walls (10) of the profile sections (1, 2);
- the translation-limiting stop (16) is arranged transversely in the notch (7) between two lateral walls (10) of the profile sections (1, 2).

9. The aircraft cable raceway as claimed in claim 8, **characterized in that** the electrical barrier device (8) is mobile in translation along the longitudinal axis (22), this translation being limited, on the one hand, by the contact of the translation-limiting stop (16) with one of the profile sections (1) and, on the other hand, by the contact of the translation-limiting stop (16) with the other profile section (2).

10. The aircraft cable raceway as claimed in claim 9, when it is dependent on claim 3, **characterized in that** the profile sections (1, 2) each comprise at least two cable guide channels (13, 14), the two bottom-wall bridging bases (11) of the electrical barrier device (8) each being arranged in one of these cable guide channels (13, 14).

11. The cable raceway as claimed in claim 10, **characterized in that** the translation-limiting stop (16) is arranged transversely in the portion of the notch (7) located between the two cable guide channels (13, 14).

12. The cable raceway as claimed in one of claims 10 or 11, **characterized in that** it comprises electrical wiring harnesses which are arranged in the two cable guide channels (13, 14) and which extend in the cable passages (17, 18) of the electrical barrier device (8).

13. The cable raceway as claimed in one of claims 8 to 12, **characterized in that** it comprises a resilient joint (4) connecting the two profile sections (1, 2) in the region of the notch (7).

14. The cable raceway as claimed in one of claims 8 to 13 in combination with claim 6, **characterized in that** the profile sections (1, 2) comprise at least one complementary projection which is opposite a slot (30) of the bottom-wall bridging base (11).
